# EUROPEAN PATENT APPLICATION

(11) **EP 1 526 454 A2**
(43) Date of publication of application: **27.04.2005**
(21) Application number: 04023382.7
(22) Date of filing: 30.09.2004
(51) Int. Cl.: G06F 9/445

(54) **Application identity for software products**

(30) Priority: 24.10.2003 US 513941 P; 15.06.2004 US 868183
(71) Applicant: MICROSOFT CORPORATION, Redmond, WA 98052 (US)
(72) Inventor: Stritzel, Adam D. Microsoft Corporation, Redmond, WA 98052 (US); Kavalam, Jude Jacob Microsoft Corporation, Redmond, WA 98052 (US); Noonan, Timothy D. Microsoft Corporation, Redmond, WA 98052 (US); Tsuryk, Valeriy V. Microsoft Corporation, Redmond, WA 98052 (US); Probert, David B. Microsoft Corporation, Redmond, WA 98052 (US); Li, Eric Microsoft Corporation, Redmond, WA 98052 (US); Rector, John Austin Microsoft Corporation, Redmond, WA 98052 (US); Sambotin, Dragon C. Microsoft Corporation, Redmond, WA 98052 (US)
(74) Representative: Grünecker, Kinkeldey, Stockmair & Schwanhäusser Anwaltssozietät

(57) **Abstract**

Managing the installation, execution, and removal of application programs by an operating system via an application identity associated with each application program. A method of the invention assigns the application identity to each application program and a resource identity to each resource associated with each application program. The method relates the assigned application identity and resource identity to enable manipulation of the application program and its resources.

## Description

### CROSS-REFERENCE TO RELATED APPLICATION

This application claims the benefit of U.S. Provisional Application No. 60/513,941, filed October 24, 2003. Filed simultaneously herewith is U.S. non-provisional patent application entitled "Operating System Resource Protection," attorney docket number MS#306894.01 (5103) (which also claims the benefit of U.S. Provisional Application No. 60/513,941, filed October 24, 2003), the entire disclosure of which is incorporated herein by reference.

### TECHNICAL FIELD

Embodiments of the present invention relate to the field of operating systems for computing devices. In particular, embodiments of this invention relate to managing the installation, execution, and removal of application programs by the operating system via application identities.

### BACKGROUND OF THE INVENTION

While current operating systems have made dramatic strides in improving their usability and reliability, further improvements are desired. In particular, the user experience relating to the installation, management, and removal (i.e., uninstallation) of application programs still needs improvement. For example, during installation an application program may incorrectly configure a system setting or overwrite a file needed by another application program. It may also be difficult for a user to uninstall undesirable application programs such as ad-ware and spy-ware. Many system crashes and hangs may also be attributable to application problems. For example, the following situations may cause an application program and possibly the underlying operating system to fail: an incomplete uninstall of an application, over deletion when uninstalling an application program, and improperly stored files.

In some current operating systems, a newly-installed application program may overwrite a shared dynamic-link library (DLL) file with an older or newer version needed by the newly-installed application program. If the older or newer file is incompatible with the overwritten file, a currently-installed application program dependent on the overwritten file may crash when attempting to access the overwritten file.

Current operating systems lack a mechanism for identifying and associating all the files and system settings associated with the installation of an application program. The operating systems want to recognize the application as there is a need to identify which application the system is acting on behalf of. However, applications may spread themselves across multiple runtime processes, helper utility programs, or system processes doing work for the application. Therefore, the operating systems have difficulties accurately identifying which application a runtime object is working as.

Furthermore, operating systems need a means to identify which resources, such as files and system settings, have been created by the operating system itself As such, the operating system OS wants to identify which runtime objects are executing as the operating system as opposed to executing as a non-OS application. Without identifying the OS runtime objects, the system has a hard time restricting only OS runtime object accesses to system objects such as files.

Accordingly, an improved system and method for managing application impact is desired to address one or more of these and other disadvantages.

### SUMMARY OF THE INVENTION

Embodiments of the invention include uniquely identifying an application program or other software product and its associated system objects (e.g., files) to allow an operating system to identify and differentiate between different application programs. In an embodiment, the invention includes an improved operating system that dynamically determines and assigns an identity to an application program. The operating system persists the assigned identity for use by the operating system whenever the application program is executed. Embodiments of the invention include methods for determining or assigning application identities such as: (1) direct assignment by a developer or application developer using an application manifest, (2) indirect identity assignment (e.g., through an installation program), (3) assignment based on an assessment of the files comprising the application program (e.g., a "footprint"), and (4) assignment based on an impersonation of one application program by another application program.

Various embodiments of the invention ensure the clean uninstallation of an application program from the system, prevent an application program from accessing unauthorized services or performing unauthorized actions, virtualize system resources to better isolate application programs from each other, enable rollback of application impact to the system (e.g., "undo" file type associations), and implement application-based impact tracking of files and system settings.

Embodiments of the inventions present a general runtime object management strategy which allows the system and user to configure custom solutions to act on a collection of runtime objects and to associate runtime objects based on common properties. One such property includes the collection of runtime objects that represent an application.

Some embodiments of the invention enable the operating system to identify itself, and to associate the operating system identity with its own files, system settings, and other objects. Further, some embodiments of the invention enable the operating system to recognize which runtime objects are executing as the operating system. Other embodiments of the invention create a security system based on application identity instead of or in addition to user identity.

In accordance with one aspect of the invention, a method manages a plurality of applications on a computing system. The method includes assigning an application identity to an application program. The assigned application identity differentiates the application program from other application programs. The method also includes assigning a resource identity to a resource associated with the application program. The method also includes relating the assigned application identity and the assigned resource identity.

In accordance with another aspect of the invention, a method enables an operating system to protect a resource associated therewith from modification by an application program. The method includes assigning an identity to an application program. The method also includes receiving a request from the application program for an operating system resource. Responsive to the received request, the method also determines whether a particular version of the operating system resource exists for the application program based on the identity and provides the application program with the particular version if the particular version exists for the application program. Otherwise, the method generates the particular version and provides the generated, particular version to the application program responsive to the determining.

In accordance with yet another aspect of the invention, one or more computer-readable media have computer-executable components for managing a plurality of applications on a computing system. The components include a creator component to assign an application identity to an application program. The assigned application identity differentiates the application program from other application programs. The components also include a revision component to assign a resource identity to a resource associated with the application program and an assignment component to relate the assigned application identity and the assigned resource identity.

In accordance with still another aspect of the invention, a system manages a plurality of application programs via an application identity associated with each of the plurality of application programs. The system includes an operating system that has an operating system resource associated therewith. The system also includes a memory area to store an application program and an application identity associated therewith. The system also includes a processor programmed to communicate with the operating system and the memory area to receive a request from the application program for the operating system resource and provide, responsive to the received request, a particular version of the operating system resource to the application program based on the application identity.

In accordance with another aspect of the invention, a computer-readable medium stores a data structure representing an identity context associated with a software product. The data structure includes an application identity field storing a value identifying the software product. The data structure also includes an isolation identity field storing a value associated with a group of software products to which the software product belongs.

Alternatively, the invention may comprise various other methods and apparatuses.

Other features will be in part apparent and in part pointed out hereinafter.

### BRIEF DESCRIPTION OF THE DRAWINGS

FIG. 1 is an exemplary flow chart illustrating application identity generation by obtaining metadata about an application from different sources.

FIG. 2 is an exemplary block diagram illustrating isolation identities.

FIG. 3 is an exemplary flow chart illustrating the generation of an application identity and an isolation identity.

FIG. 4 is an exemplary block diagram illustrating the generation of an identity context for a file or other resource associated with an application program from components of the application's metadata.

FIG. 5 is an exemplary block diagram illustrating the propagation of an identity context during creation of a new file.

FIG. 6 is an exemplary block diagram illustrating identity information revision during process creation.

FIG. 7 is an exemplary flow chart illustrating the revision of identity information.

FIG. 8 is an exemplary block diagram illustrating an architecture for application identity services.

FIG. 9 is a block diagram illustrating one example of a suitable computing system environment in which the invention may be implemented.

Corresponding reference characters indicate corresponding parts throughout the drawings.

### DETAILED DESCRIPTION OF THE INVENTION

In an embodiment, the invention includes assigning a unique identity to each application program or other software product installed or to be installed on a computing device. In particular, the invention includes assigning an application identity to the application program and a resource identity to each resource created or associated with the application program. A resource includes, but is not limited to, a file, folder, process, thread, system setting, named object, an application programming interface (API), a specific code path, a library of executable routines, operating system property value, and an operating system resource. For example, a number of APIs and code paths provide send mail capability, and access to these APIs and code paths might be restricted. In another example, the ability to reboot the system is restricted. Resources also include the system's name space (e.g., the 'names' themselves), not just specific named objects. For example, reserving or 'squatting' on a name before an object is created with the name creates both fragility and security issues.

The assigned application identity differentiates the application program from other application programs. An embodiment of the invention relates the application identity and the resource identity to enable safe manipulation, extensibility, and integration of the application program and its resources with the operating system. The application identity and resource identity provide uniqueness, consistency, and persistency (i.e., a non-evolving identity). Generally, an application identity and resource identity may be explicitly defined by an application manifest or other metadata or may be derived from attributes of the application. In one embodiment, the application identity and the resource identity are the same.

Similarly, the invention identifies resources that belong to the operating system. The operating system identity may be explicitly reserved or defined in the operating system manifest or from metadata, or derived during OS installation or execution.

Various benefits are achieved by identifying an application program and its resources. For example, identifying each application program enables users to undo any changes made to a computing device because the changes made by each application program (e.g., interactions with the computing device and resources) are persisted and logged. Further, identifying each application program and its associated resources enables the user to fully remove (e.g., uninstall) the application program and undo any changes made by the application program to the computing device resources.

In another example, identifying each application program installed or to be installed on a computing device enables the operating system to protect vital resources from accidental or malicious modification by an application installer. The application identities and operating system identity improve the consistency and reliability of the underlying operating system. The invention may also be combined with other protection strategies such as read-only access, isolation, virtualization, change tracking, and sandboxing to provide further protection.

The description, figures, and examples herein are not limited to any specific operating system. Rather, embodiments of the invention may be applied to an operating system of any type, model, and configuration. Further, embodiments of the invention are not limited to any of the exemplary methods described herein for assigning identities. Rather, embodiments of the invention are applicable to any method or design for uniquely identifying an application program and its associated resources, as well as identifying the operating system and its associated resources.

### Determining and Storing an Application Identity

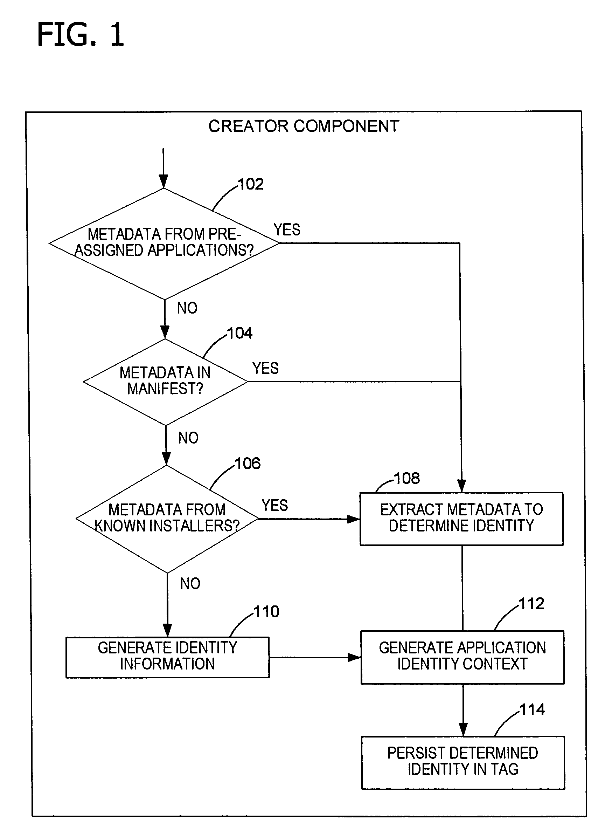

Referring first to FIG. 1, an exemplary flow chart illustrates a method for generating an application identity for an application program to be installed on a computing device. The method illustrated in FIG. 1 may be performed by an operating system component (e.g., a creator component) or a component not associated with an operating system. For example, an identity driver may be used to provide the identification service illustrated in FIG. 1. The driver may be configured to scan binary files as part of the installation process to generate application identities and also identify which binary files belong to each other.

The flow chart in FIG. 1 illustrates the extraction of metadata from various sources including, but not limited to, a pre-assigned application identity at 102, a manifest associated with the application program at 104, and an installation program used to install the application program at 106. The method extracts the metadata at 108 to determine the application identity. While FIG. 1 illustrates analysis of the sources in a particular order, other orderings are within the scope of the invention.

For the pre-assigned application identity embodiment, the operation system is configured to scan the deployment package of an application program. A unique signature is then produced from the scan (e.g., by using a hash). The unique signature is used to establish a link with a pre-assigned application identity. In one embodiment, the hash includes a sufficiently strong hash to render it probabilistically unlikely that the hash of any two files creates the same signature.

In some embodiments, the application identity is created by the application developer and is stored in an application manifest. The manifest accompanies the application program when the program is installed. The method determines an application identity from the manifest (e.g., included in a software distribution package) by locating and extracting information specific to the application program. The invention extracts and stores the metadata to determine the application identity for the application program to be installed. In one example, application identity is generated from a strong name by hashing the name and the PKH fields. In this embodiment, the manifest is a declarative source of the application identity.

If no metadata from these sources exists, embodiments of the invention identify the application program by generating a non-declarative application identity. The method generates the application identity information at 110 (including an application identity tag at 112) when the installation process begins if the application program does not have an assigned application identity (e.g., an application without a manifest or other predefined mechanism). This may be accomplished by locating and extracting specific information about the application program from the installation package (e.g., vendor, product name, product version, and module checksum). For example, an application suite with a number of different applications may be installed from a single installation program. The installation program may be configured with a single application identity that is applied to all programs installed from the single installation program. In a specific example, a business productivity suite may include an electronic mail program and word processing program, but the installation program may be configured to apply the same application identity to each application being installed because both programs are from the same application suite. In another embodiment, the installation program generates comparable identity information from the software product footprint. For example, different versions of the same application will have a different footprint, resulting in different application identities. In yet another example, a setup file (e.g., setup.ini) may be part of the software product deployment package. The setup.ini file includes information for an installation bootstrapper component (e.g., setup.exe) to perform. A property such as AppName in a specific section (e.g., Startup) of the setup.ini file may include the name of the product. In another example, file version information resources may include entries such as CompanyName and ProductName. The values for these entries are used as product vendor and product name attribute values. The information is extracted with functions such as GetFileVersionInfo() and VerQueryValue(). In an example in which the application identity data structure stores sixteen bytes, the first half of the structure stores hash values generated from the identified vendor name and product name.

The determined and generated identity information is stored (e.g., persisted) at 114 for future use (e.g., by the underlying operating system).

### Determining the Components of an Application Program

Application programs include computer programs or pieces of software designed to perform one or more specific tasks or functions. An application program as perceived by a user may actually be a collection of components including, but not limited to, executable modules, dynamic libraries, resources, and supplementary files logically or functionally grouped to perform the set of specific tasks. The components may be bound together explicitly and implicitly to form the application program. Some of the components of an application program may have a hard dependency on each other. Some application components may be shared with other applications. The application program may have routines imported from other modules during a process referred to as "binding." For example, in a portable executable file format, an import section defines the routines, modules, variables, and other symbols the loader should locate and link to create the application program. In another example, references to all the external assemblies used by the application program are listed in a manifest included within an assembly dynamic-link library (DLL) or supplied externally to service multiple DLLs.

Implicit dependencies are typically not regulated by any data structure within file formats. One module may depend on a symbol exported from another module, but the binding happens in runtime when a host module dynamically loads the other module. For example, a host module requests creation of an object instance and requests a reference to the module which provides the implementation for the object. In another example, a component may rely on data stored within a non-executable file such as a bitmap, an icon, video, and sound.

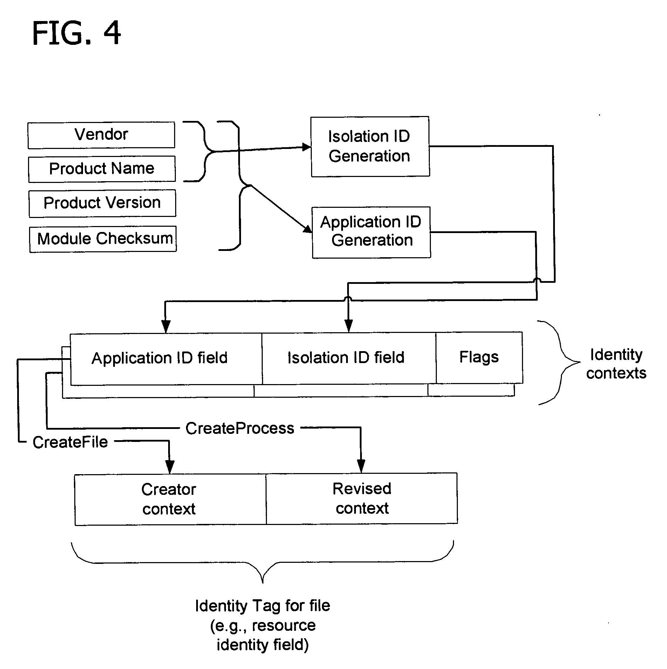

Embodiments of the invention include methods for identifying the explicit and implicit module dependencies to enable identification of an application program in various ways. Typically, the components that form an application program are grouped together by the application vendor into one deployment package. The methods include using the deployment package to track the files created and system settings stored during installation to identify the files belonging to a specific application program. The methods assign an identity to each of the files created by the application. The identity is associated with the application identity of the application program as illustrated in FIG. 4.

### Isolation Identities

In some embodiments, an isolation identity is assigned to an application program in addition to an application identity by an operating system component (e.g., a group component) according to the invention. While the isolation identity may be associated with just this application, the isolation identity may also be associated with another application program having another application identity associated therewith. The isolation identity may be used to logically group application programs with different application identities. In general, the application programs may have a common context (e.g., installed by a particular user). For example, if two application programs from the same application suite have different application identities, the operating system assigns the same isolation identity to both application programs. Some or all of the information gathered to generate the application identities may be used to group the applications into isolation identities based on analogous characteristics. For example, embodiments of the invention may use the vendor name, product name, and/or a signature of the binary content of the module to generate the isolation identity.

In general, an isolation identity is generated by obtaining module metadata or other attributes. Based on the type of the module and functional designation there are various ways for the module vendor (e.g., developer) to associate metadata with the module. The metadata may be part of the physical file representing the module or stored in a separate file or files.

The application programs assigned to a specific isolation identity create a virtual program group. All applications programs in the virtual program group receive the equivalent virtualized view of the operating system (e.g., the same level of access to system resources). That is, different applications with the same isolation identity share the same virtualized view of the system. In an example in which different versions of the same application program are assigned different application identities, the different versions may be assigned the same isolation identity because the different versions are to receive equivalent access to system resources.

An operating system provides access control for its resources via the application identities and/or the isolation identities. For example, the operating system may maintain multiple copies and/or versions of the same file (e.g., virtual copies) with potentially different access rights with respect to an application. The operating system dynamically virtualizes a file requested by an application program with a specific isolation identity for write access. In one embodiment, all products from different vendors and different products from the same vendor have different virtualized views while all versions of the same product from the same vendor share the same virtualized view. The comparison of the vendor names and product names may be based on the case insensitive string values for the vendor name and product name attributes.

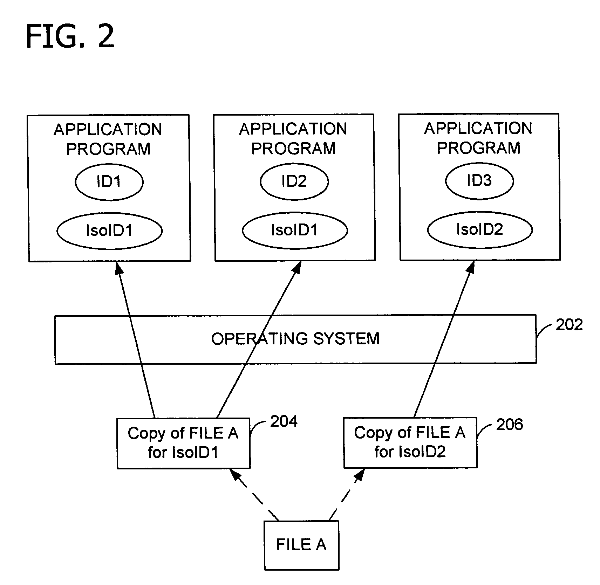

Referring next to FIG. 2, an exemplary block diagram illustrates the use of isolation identities. In FIG. 2, an application program with application identity ID1 and an application with application identity ID2 have the same isolation identity IsoID1. An application program with application identity ID3 has isolation identity IsoID2. An operating system 202 maintains two copies of File A: one copy 204 of File A for write access by applications with IsoID1 (e.g., application programs ID1 and ID2), and one copy 206 of File A for write access by applications with IsoID2 (e.g., application program ID3).

In operation, a component of an operating system 202 according to an embodiment of the invention (e.g., a virtualization component) receives a request from application program ID1 for File A. In one embodiment, the request includes the assigned identity ID1 and IsoID1. In other embodiments, the operating system 202 infers the assigned identity ID1 and IsoID1 or queries the application program ID1 for the assigned identity ID1 and IsoID1. Responsive to the received request, the operating system 202 determines whether a particular version of the operating system resource exists for the application program based on the received identity. In this case, the copy 204 of File A exists for the identity IsoID1. The operating system 202 provides the application program ID1 with the copy 204 of File A exists for IsoID1. If the copy 204 of File A for IsoID1 did not exist, the operating system 202 would generate the copy from original File A and provide the generated copy to application program ID1.

### Generating the Application Identity and Isolation Identity During Runtime

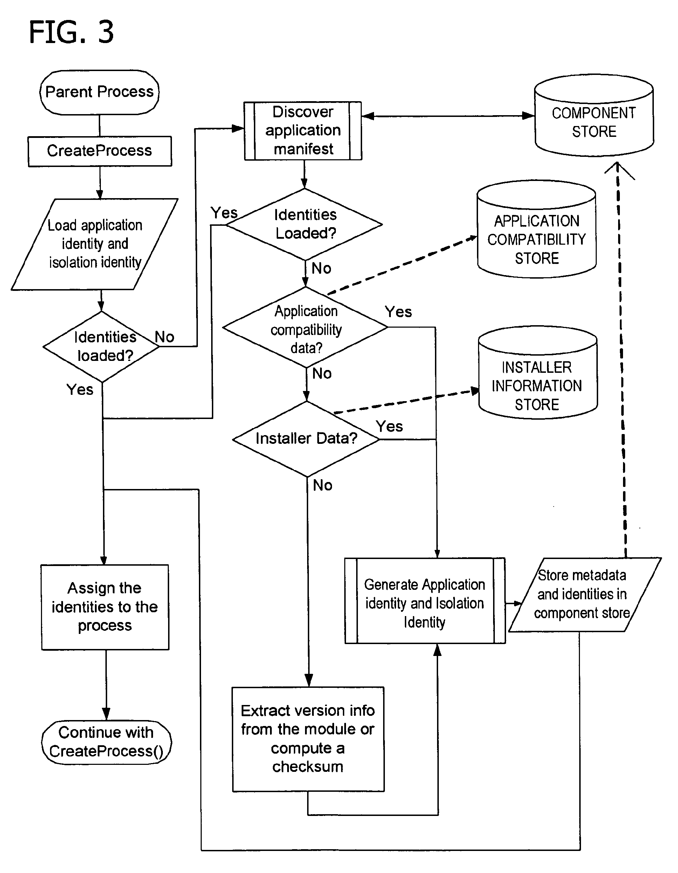

Referring next to FIG. 3, a flow chart illustrates an exemplary method for determining an application identity and an isolation identity of a module during runtime. In one embodiment, an operating system or client server runtime process executes the functions illustrated in FIG. 3. A parent process spawns a child process by, for example, invoking a function such as CreateProcess(). If the application identity and the isolation identity for the module associated with the child process exist, the method loads the identities from the identity store and assigns the identities to the process along with other runtime data. If the identities do not exist, the method performs various operations to determine and assign the identities. For example, the method consults a manifest and loads the identities from the manifest if the manifest contains the identities. The method may also consult application compatibility data and installation program data to obtain information about the module. The method may further extract version information from the module or compute a checksum to determine the application identity and isolation identity. The method stores the determined identities for future use (e.g., as a globally unique sixteen byte data structure).

The application identity and the isolation identity may be combined to form an identity context associated with an application program or a module therein.

### Application Identity Data Structures

The identity tag for a module or component persists the application's identity context. The identity context may also include one or more flags to store additional information such as attributes associated with the methods of generating the application identity and the isolation identity. For example, the flags may include an installer bit that indicates that the metadata used to generate the application identity and the isolation identity was extracted from a module identified as a known installer.

Referring next to FIG. 4, an exemplary block diagram illustrates the structure and generation of an identity tag for a file associated with an application program. Embodiments of the invention include methods for using an identity context associated with an application program to create an identity tag for each file or other resource created or modified by the application program. The identity context is persisted within a store using kernel tagging services. For example, the identity context may be persisted within a file stream or a file attribute.

In one embodiment, the identity tag for a file or other component includes a creator context formed during creation of the file (e.g., CreateFile()) and a revised context formed during process creation (e.g., CreateProcess()). The file tag may only have a creator context until process creation for the file during which the identity is elaborated or revised.

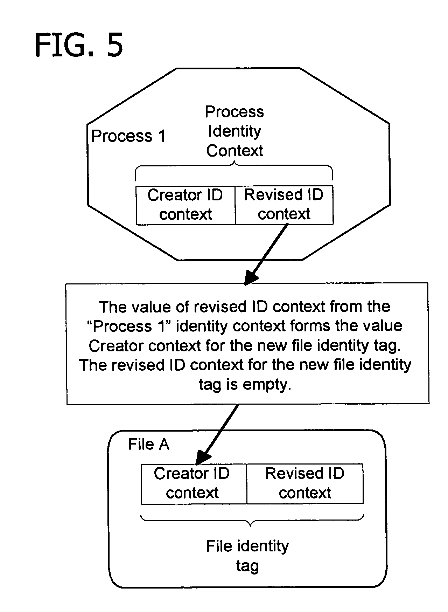

Referring next to FIG. 5, an exemplary block diagram illustrates the propagation of an identity context during file creation. In the example of FIG. 5, Process 1 creates File A. The revised ID context from the identity of Process 1 forms the creator ID context portion of the identity tag File A, while the revised ID context for File A remains empty.

### Revising the Identity Context During Process Creation

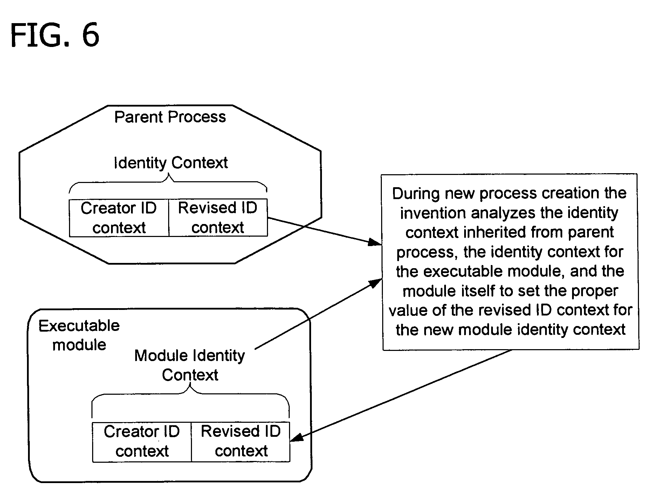

Referring next to FIG. 6, a block diagram illustrates elaboration of the identity context for a module such as File A during process creation for the module to create the revised identity context. For example, when a user executes the module, embodiments of the invention determine if there is a creator identity context associated with the module. If there is a creator identity context, the identity context is elaborated to create a revised context and persist it in the tag. The revised identity context is associated with the runtime data about the module stored, for example, by the operating system.

If an identity tag does not exist for the module, embodiments of the invention determine an identity and form the creator context and the revised context. The created identity context is persisted in the file's tag for future execution of the module.

Revising the identity context includes using heuristic algorithms and checking signatures with a pre-populated library of application identities (e.g., inherited identity context). Further, elaboration methods include analyzing the revised context of the parent process, the creator context of the module (e.g., File A), and the module itself (e.g., File A) to generate the revised context of the module. In one example, the creator context for the module is copied into the revised context if the module does not have a declarative identity. In another example, the value for the revised context is derived from the module or metadata if the module has a declarative identity.

In an alternative embodiment, a generic system utility executes without an identity but derives an identity from the first non-system library that it loads.

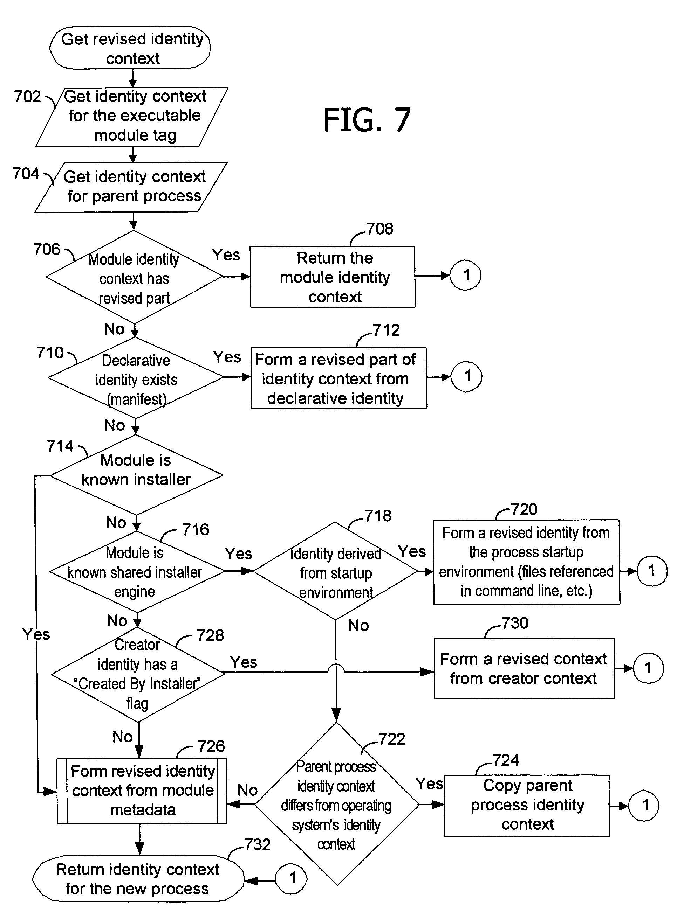

Referring next to FIG. 7, an exemplary flow chart illustrates the revision of identity information during process creation. An embodiment of the invention includes components for revising (e.g., a revision component) the identity context and relating (e.g., an assignment component) the revised identity context to the application identity. In one embodiment, the method illustrated in FIG. 7 is performed by a single operating system component. The method includes obtaining the identity context for the module being executed at 702 and the parent process at 704. If the module has a revised identity context at 706, the revised identity context is returned for the process at 708. If the module does not have a revised identity context at 706 but a declarative identity (e.g., a manifest) exists for the module at 710, the method forms the revised context of the module's identity context from the declarative identity at 712. If the declarative identity does not exist at 710, but the module is a known installer at 714, the method forms the revised context from the module metadata at 726. If the module is not a known installer at 714, but is a known shared installer engine at 716, the method determines if the identity context should be derived from the startup environment at 718. If the identity context should be derived from the startup environment at 718, the method forms the revised context from the process startup environment (e.g., the files referenced in the command line) at 720. If the identity context does not need to be derived from the startup environment at 718, the method determines whether the parent process identity context is the same as the system identity context at 722. If the parent process identity context is different from the system identity context at 722, the method copies the parent process context into the module identity context at 724. If the parent process identity context is the same as the system identity context at 722, the method forms the revised context from the module metadata at 726.

If the module is not a known shared installer engine at 716, but the module's identity context has a "created by installer" flag at 728, the method forms the revised context from the creator context at 730. If the module's creator identity context does not have a "created by installer" flag at 728, the method forms the revised context from the module metadata at 726. The method returns the revised identity context for the new process at 732.

In one embodiment, the assigned identity context for a module may be tagged for re-assignment. A subsequent attempt to create a process on the module prompts an embodiment of the invention to generate and assign a new identity. In another embodiment, information is persisted to enable reverse-engineering and disaster recovery of the file/process creation hierarchy. Such information may include a system-wide cache of each module and its identity tag. In yet another embodiment, a manifest is automatically generated and updated with identity context data for each module.

### Identity Context Impersonation

In some cases it may be useful to allow an application to temporarily impersonate another application. For example, it may be desirable to have a server-based installation program temporarily impersonate the application identity of a client resident installation program so that the installed application will appear to have been installed from the client. The use of impersonated application identities allows a thread or process to execute with the identity context of another application. Embodiments of the invention may be configured to provide a runtime service (e.g., an impersonation component) to transition an application identity from one application to another. The runtime service enables an application to acquire the identity of another application for performing work on behalf of an application after the completion of which the original identity is restored. Access control may be implemented to enable only selected application programs to impersonate other application programs. For example, the requestor's rights are checked against a security descriptor of the target process or token.

Embodiments of the invention also provide implicit impersonation. For implicit impersonation, the system overrides the identity contexts obtained from the identity tag and assigns different contexts based on other information about the process module. For example, a parent process instantiates an object within a context of the local server. The server thread is assigned the same identity context as the parent process that initiated the object instantiation. An example of explicit impersonation includes assigning the identity of a parent "bootstrapper" process to another process if the other process is a known shared installer engine.

### Application Security Identity

Embodiments of the invention grant security rights to an application by associating the rights with the application's identity and the identity of the user that is running the application. Application-specific security rights can be associated with a running application by adding an application-specific Security ID (APP-SID) to the security token associated with processes and services that execute on behalf of the application. Access control lists (ACLs) associated with operating system objects (including but not limited to files, ports, memory, processes, threads, and system services) include access rights with respect to APP-SIDs as well as security identifiers for users.

With the invention, the access checks in a security monitor of the invention consider multiple SIDs when deciding to grant access. In previous systems there was only the single SID belonging to the user. APP-SIDs introduce at least one new SID to compute against the access rights granted by the ACL. And in some embodiments, an access request may have more than one APP-SID associated with the request.

The embodiment of APP-SIDs in a typical security monitor interpret multiple SIDS in one of several ways as specified by the ACL itself: grant access according to the intersection of privileges of all the SIDs presented (e.g., the least common) or grant access according to the union of the access rights of the SIDs.

Computing the intersection of the SIDs may occur when a user has access to an object, but does not want to grant that access to an application. Alternatively, computing the intersection of the SIDs may occur when an application has access to an object but doesn't want to grant access unless the user (or all other applications) also has access. One use of intersection restricts the access of an application downloaded from the network so that it only has access to certain files that are accessible by the user.

Granting access according to the union interpretation allows an application to acquire additional access that the user may not possess. In one such use, a user may not have access to a system service to change the date in the system clock. But the user may have access to a service which has an APP-SID that does allow the date to be changed. The advantage is that the accessible service provides more limited functionality than the underlying service for changing the date, such as only allowing date changes that fall within a limited range. APP-SIDs allow such intermediate service to be written.

Some embodiments use other combinations of access checks, such as respecting the DENY Access Control Entry (ACE) in an Access Control List to deny access even if GRANT access is computed by union. Other embodiments may treat application and user SiDS differently, using the GRANT/DENY ACEs associated with an APP-SID to grant or deny additional privileges to a user's SID with respect to an object.

In another embodiment, the application identity may also be used to associate generalized privileges (e.g., capabilities) with an application. Capabilities differ from ACL-based security in that a capability is not checked against an access list associated with an object but is instead explicitly checked for by code in key system paths. For example, a capability (e.g., send mail) may be associated with an application. There is no specific object associated with sending mail, but there are a number of code paths that may be used to send mail. Each code path checks for the privilege of the application to send mail before permitting the application to execute the code path.

### Servicing Applications based on their Application Identity

Application identities and isolation identities provide a framework to manage the manner in which an operating system provides services to applications that are installed on the system. The services may be provided based on application identities or isolation identities. An embodiment of the invention uses a storage system for the application identities and/or the isolation identities along with an application programming interface (API) that provides access to the identity information during runtime. Depending on the implementation, the service provider may be able to acquire the identity of the application to be serviced regardless of the runtime state (i.e., whether the application is running or not) to perform the actions over the application process or the files or resource set belonging to the applications.

Next, some potential benefits of the features described herein are discussed. While these are potential benefits, actual implementation and selection of particular features will dictate which of these advantages, if any, are associated with a particular implementation. Software application identities allow the system to recognize an application as one entity and provide services to it. Determining and assigning non-declarative identities enables the operation system to automatically recognize every application installed and to be installed on the system. The precise and reliable identification of the software deployment package is an important for early detection and population of the identities of the application programs associated with the package. The concept of providing services to the application expands and generalizes the software administration process from the servicing of different applications each with individual activities to the common set of actions from the operating system toward the software loaded. Within a scope of the application identity framework, each application has its own identification information. There is a class of tasks to be performed by one application on behalf of another. The most typical example is administration and maintenance. Embodiments of the invention allow the administrative tools and utilities to impersonate the servicing application.

### General Runtime Object Management

A set denotes a container object which contains runtime entity members, such as processes, threads, and other sets. The members of a set share an intrinsic property such as all runtime objects belonging to an application, a logon session, or by some user-defined rule. The operating system may define standard set types for each of the intrinsic properties available for a set, and allow the user and applications to define custom set types. A runtime object may belong to multiple sets, and the list of the runtime object's set membership may be obtained.

A set may also encompass other sets. For example, an application suite of products may define a set per product and create a set, representing the application suite, which contains each of the products' sets. A utility program process, used by the application suite to launch each product, may be a direct member of the application suite's set but not necessarily a direct member of the individual product sets.

The set allows collective actions on all its members such as suspend, terminate, control/audit resource consumption, virtualize resources, query membership, add/remove member, query/set intrinsic property, query/set set type, etc. The operating system and other components may define other actions to take on a set.

Sets allow inheritance attributes, where any runtime object created by a parent automatically joins the parent object's sets with inheritance enabled. Another inheritance attribute allows the set memberships to propagate across communication networks for client-server models for the duration of the work item. To illustrate, a client program process contacts a server process to perform a work item. Then, the server threads that receive and process the request temporarily join the inheritance sets of the client context until the work is completed.

Each member in a set has a designation of how the member joined the set. The designation includes, for example, child creation inheritance, work item inheritance, or explicit membership. Child creation inheritance represents members that join the set due to the inheritance attribute when a parent object creates a child object. Work item inheritance means the runtime object is performing work on behalf of another runtime object. Explicit membership denotes that a user or program manually added the runtime object to the set. Specialized set types may specify custom designations for their particular needs.

The operating system may also control the security of the set via ACLs so that only the appropriate entities may perform accesses on a set.

### Application Runtime Identification Using Sets

Sets provide a convenient way to identify all the runtime objects belonging to the application as well as the runtime objects performing work on behalf of the application. The system creates an application set type and sets the intrinsic property as the application identity value.

As an application is launched, the operating system retrieves the application identity for the application image and opens or creates the application set that has the application identity as the intrinsic property. The operating system adds the newly-created runtime object, such as the process object, to the application set. The application set may have a special designation in this case to denote that the member joined the set via application launch. The new runtime object inherits its parent's sets as appropriate.

Components that want to determine which runtime objects belong to an application open the application set with the target application identity and query its members. The caller may choose to distinguish the members between their designation: inheritance or explicit. Inversely, components may determine which applications a runtime object is running as. The caller queries the runtime object's set membership and filters for the application set type. Components may further distinguish the set membership via the join designation.

### Identifying the Files of an Application for Application Identity

Identifying the files belonging to an application serves an important role since applications typically launch their specific computer-executable instructions from files such as executables, dynamic-link libraries (dlls), and resources. In order to identify the application's files when the application does not declare which files belong to it, the operating system may track the file creations performed by an application and associate those files with the application.

One means of discovering the application's files involves monitoring application file creations with a file system filter driver. For example, when an application installation process starts, the operating system determines the appropriate application identity of the application and adds the process to the associated application set. As any runtime object member of the application set creates a file, the operating system associates the file with the application so that subsequent runtime objects launching from the file also join the application set.

The invention distinguishes between user files created by the application and application files created by the application. To illustrate, a word processing application installs application files which it needs for execution. Yet, the same word processing application creates document files on behalf of the user. The operating system may provide services, such as backup, where the user document files should get backed up, but not the application's files. Conversely, the user might want their user document files skipped by some operating system services like application uninstall or application resource virtualization.

Ultimately, the application knows best which file creations get performed on behalf of the user. Thus, the application may denote to the system that a particular file creation is for a user file. Every other file creation gets treated as an application file.

Without application cooperation, the operating system may attempt to distinguish between user files and application files by monitoring application installation and/or updating runtime objects, which the operation system treats as application files. Other file creations performed by application get treated as user files. Possible other identifying metadata include, but are not limited to, file extensions, existence of a code module header, and file system path.

### Identifying System Components and Associated Resources

Often components need to determine whether a particular runtime object belongs to the operating system and which resources were created by the operating system. For example, the operating system has specific resources that should be restricted for access by operating system components. Applications should not be able to access those resources.

To determine the resources belonging to the operating system, the operating system may explicitly declare its resource ownership in a manifest, pre-populate the association database with identification information for the resources belonging to the operating system, directly sign its resources, store its resources in protected locations, or monitor the resource creation performed by the operating system installer. Other techniques for monitoring the operating system installer are contemplated.

Since the application identity of the operating system may grant more access than an application acquires, the operating system application identity is guarded. In one embodiment, the application identity used to denote the operating system is reserved and restricted for assignment by only privileged operating system components.

Operating systems may wish to further distinguish between components of the operating system. This granularity allows the operating system to protect individual components from other operating system components.

### Capabilities-Based Security

By having a runtime application identity and recognizing which files belong to the application, the system may attempt to protect objects based on application identity. The system may utilize application identity in addition to user identity to protect objects.

For example, an application may decide that it wants to restrict access to its temporary files to itself. Thus, the application sets the security on the file to allow only the application sole access to the file. When a different application tries to open the original application's temporary file, the system denies the request.

In another example, a finance application may decide that access to the user's finance documents should be restricted to just that user and also to that application. In this manner, a virus program running in the user's context lacks access to the user's finance documents. If other finance applications need access to the user's finance documents, the original finance application may explicitly grant access to specific applications or to a group of finance application identities.

In yet another example, the system allows the user and application publisher to define actions that the application may perform (e.g., access user personal documents or access the network). The system components monitoring or performing the actions check whether the application has been granted access to that capability. If the application attempts to perform an action for which it lacks access, then the system responds appropriately. The system may reject the attempted action or notify the user of the attempt and confirm whether the application should be granted access to that capability.

In one embodiment, the user defines which application publishers should be trusted to specify application capabilities. Therefore, a malicious program will likely not have a trust application publisher, thus the user rejects certain application's action requests due to the untrusted or unknown application publisher.

The system of the invention attempts to expand existing security systems beyond user level granularity (e.g., per ACLs) into a more user-understandable system of application actions which the system of the invention enforces.

### Exemplary Architecture

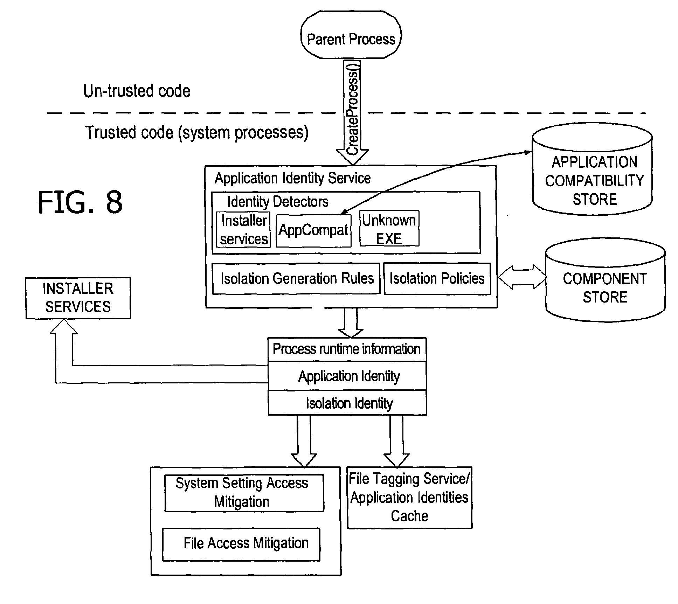

Referring next to FIG. 8, an exemplary block diagram illustrates an architecture for application identity services in the context of a mechanism to protect system resources. The architecture in FIG. 8 is merely one example of the application of identity information. Other architectures and other applications of the identity information are contemplated to be within the scope of the invention.

In FIG. 8, a client server runtime process determines and assigns identities to each module during CreateProcess(). The determined and assigned identities are used to perform file and system setting mitigation to protect operating system resources. A component store or other memory area stores auto-generated application identity for non-manifested applications as well as the isolation identity for all types of processes. Isolation generation rules and isolation policies allow consistent grouping of the application identifiers into larger groups based on a set of criteria. A file tagging service stores the application identity and isolation identity within the file stream for every file created by the process. System setting mitigation and file mitigation use the application identity and isolation identity to create separate virtual environments and mark the transacted changes.

### Exemplary Operating Environment

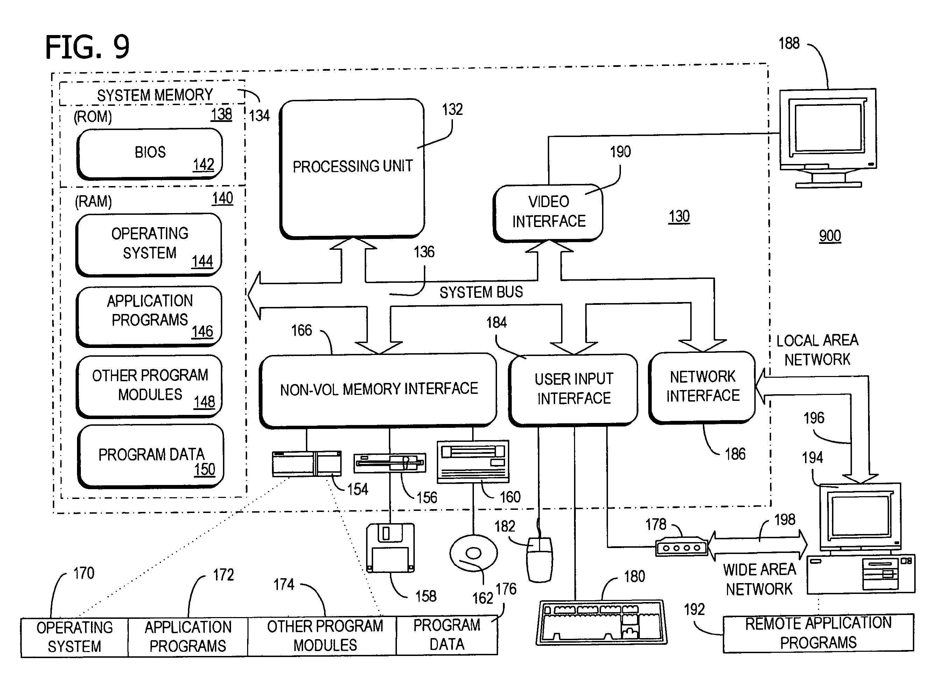

FIG. 9 shows one example of a general purpose computing device in the form of a computer 130. In one embodiment of the invention, a computer such as the computer 130 is suitable for use in the other figures illustrated and described herein. Computer 130 has one or more processors or processing units 132 and a system memory 134. In the illustrated embodiment, a system bus 136 couples various system components including the system memory 134 to the processors 132. The bus 136 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 130 typically has at least some form of computer readable media. Computer readable media, which include both volatile and nonvolatile media, removable and non-removable media, may be any available medium that may be accessed by computer 130. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. For example, computer storage media include RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium that may be used to store the desired information and that may be accessed by computer 130. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Wired media, such as a wired network or direct-wired connection, and wireless media, such as acoustic, RF, infrared, and other wireless media, are examples of communication media. Combinations of the any of the above are also included within the scope of computer readable media.

The system memory 134 includes computer storage media in the form of removable and/or non-removable, volatile and/or nonvolatile memory. In the illustrated embodiment, system memory 134 includes read only memory (ROM) 138 and random access memory (RAM) 140. A basic input/output system 142 (BIOS), containing the basic routines that help to transfer information between elements within computer 130, such as during start-up, is typically stored in ROM 138. RAM 140 typically contains data and/or program modules that are immediately accessible to and/or presently being operated on by processing unit 132. By way of example, and not limitation, FIG. 9 illustrates operating system 144, application programs 146, other program modules 148, and program data 150.

The computer 130 may also include other removable/non-removable, volatile/nonvolatile computer storage media. For example, FIG. 9 illustrates a hard disk drive 154 that reads from or writes to non-removable, nonvolatile magnetic media. FIG. 9 also shows a magnetic disk drive 156 that reads from or writes to a removable, nonvolatile magnetic disk 158, and an optical disk drive 160 that reads from or writes to a removable, nonvolatile optical disk 162 such as a CD-ROM or other optical media. Other removable/non-removable, volatile/nonvolatile computer storage media that may be used in the exemplary operating environment include, but are not limited to, magnetic tape cassettes, flash memory cards, digital versatile disks, digital video tape, solid state RAM, solid state ROM, and the like. The hard disk drive 154, and magnetic disk drive 156 and optical disk drive 160 are typically connected to the system bus 136 by a nonvolatile memory interface, such as interface 166.

The drives or other mass storage devices and their associated computer storage media discussed above and illustrated in FIG. 9, provide storage of computer readable instructions, data structures, program modules and other data for the computer 130. In FIG. 9, for example, hard disk drive 154 is illustrated as storing operating system 170, application programs 172, other program modules 174, and program data 176. Note that these components may either be the same as or different from operating system 144, application programs 146, other program modules 148, and program data 150. Operating system 170, application programs 172, other program modules 174, and program data 176 are given different numbers here to illustrate that, at a minimum, they are different copies.

A user may enter commands and information into computer 130 through input devices or user interface selection devices such as a keyboard 180 and a pointing device 182 (e.g., a mouse, trackball, pen, or touch pad). Other input devices (not shown) may include a microphone, joystick, game pad, satellite dish, scanner, or the like. These and other input devices are connected to processing unit 132 through a user input interface 184 that is coupled to system bus 136, but may be connected by other interface and bus structures, such as a parallel port, game port, or a Universal Serial Bus (USB). A monitor 188 or other type of display device is also connected to system bus 136 via an interface, such as a video interface 190. In addition to the monitor 188, computers often include other peripheral output devices (not shown) such as a printer and speakers, which may be connected through an output peripheral interface (not shown).

The computer 130 may operate in a networked environment using logical connections to one or more remote computers, such as a remote computer 194. The remote computer 194 may be a personal computer, a server, a router, a network PC, a peer device or other common network node, and typically includes many or all of the elements described above relative to computer 130. The logical connections depicted in FIG. 9 include a local area network (LAN) 196 and a wide area network (WAN) 198, but may also include other networks. LAN 136 and/or WAN 138 may be a wired network, a wireless network, a combination thereof, and so on. Such networking environments are commonplace in offices, enterprise-wide computer networks, intranets, and global computer networks (e.g., the Internet).

When used in a local area networking environment, computer 130 is connected to the LAN 196 through a network interface or adapter 186. When used in a wide area networking environment, computer 130 typically includes a modem 178 or other means for establishing communications over the WAN 198, such as the Internet. The modem 178, which may be internal or external, is connected to system bus 136 via the user input interface 184, or other appropriate mechanism. In a networked environment, program modules depicted relative to computer 130, or portions thereof, may be stored in a remote memory storage device (not shown). By way of example, and not limitation, FIG. 9 illustrates remote application programs 192 as residing on the memory device. The network connections shown are exemplary and other means of establishing a communications link between the computers may be used.

Generally, the data processors of computer 130 are programmed by means of instructions stored at different times in the various computer-readable storage media of the computer. Programs and operating systems are typically distributed, for example, on floppy disks or CD-ROMs. From there, they are installed or loaded into the secondary memory of a computer. At execution, they are loaded at least partially into the computer's primary electronic memory. The invention described herein includes these and other various types of computer-readable storage media when such media contain instructions or programs for implementing the steps described below in conjunction with a microprocessor or other data processor. The invention also includes the computer itself when programmed according to the methods and techniques described herein.

For purposes of illustration, programs and other executable program components, such as the operating system, are illustrated herein as discrete blocks. It is recognized, however, that such programs and components reside at various times in different storage components of the computer, and are executed by the data processor(s) of the computer.

Although described in connection with an exemplary computing system environment, including computer 130, the invention is operational with numerous other general purpose or special purpose computing system environments or configurations. The computing system environment is not intended to suggest any limitation as to the scope of use or functionality of the invention. Moreover, the computing system environment should not be interpreted as having any dependency or requirement relating to any one or combination of components illustrated in the exemplary operating environment. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

The invention may be described in the general context of computer-executable instructions, such as program modules, executed by one or more computers or other devices. Generally, program modules include, but are not limited to, routines, programs, objects, components, and data structures that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

An interface in the context of a software architecture includes a software module, component, code portion, or other sequence of computer-executable instructions. The interface includes, for example, a first module accessing a second module to perform computing tasks on behalf of the first module. The first and second modules include, in one example, application programming interfaces (APIs) such as provided by operating systems, component object model (COM) interfaces (e.g., for peer-to-peer application communication), and extensible markup language metadata interchange format (XMI) interfaces (e.g., for communication between web services).

The interface may be a tightly coupled, synchronous implementation such as in Java 2 Platform Enterprise Edition (J2EE), COM, or distributed COM (DCOM) examples. Alternatively or in addition, the interface may be a loosely coupled, asynchronous implementation such as in a web service (e.g., using the simple object access protocol). In general, the interface includes any combination of the following characteristics: tightly coupled, loosely coupled, synchronous, and asynchronous. Further, the interface may conform to a standard protocol, a proprietary protocol, or any combination of standard and proprietary protocols.

The interfaces described herein may all be part of a single interface or may be implemented as separate interfaces or any combination therein. The interfaces may execute locally or remotely to provide functionality. Further, the interfaces may include additional or less functionality than illustrated or described herein.

In operation, computer 130 executes computer-executable instructions such as those illustrated in the figures to determine and assign application and isolation identities to enable the management of a plurality of applications on a computing system.

The order of execution or performance of the methods illustrated and described herein is not essential, unless otherwise specified. That is, elements of the methods may be performed in any order, unless otherwise specified, and that the methods may include more or less elements than those disclosed herein.

When introducing elements of the present invention or the embodiment(s) thereof, the articles "a," "an," "the," and "said" are intended to mean that there are one or more of the elements. The terms "comprising," "including," and "having" are intended to be inclusive and mean that there may be additional elements other than the listed elements.

In view of the above, it will be seen that the several objects of the invention are achieved and other advantageous results attained.

As various changes could be made in the above constructions, products, and methods without departing from the scope of the invention, it is intended that all matter contained in the above description and shown in the accompanying drawings shall be interpreted as illustrative and not in a limiting sense.

## Claims

1. A computer-implemented method for managing a plurality of applications on a computing system, said computer-implemented method comprising:
assigning an application identity to an application program, said assigned application identity differentiating the application program from other application programs;
assigning a resource identity to a resource associated with the application program; and
relating the assigned application identity and the assigned resource identity.

2. The computer-implemented method of claim 1, wherein assigning the resource identity to the resource comprises assigning the application identity to an operating system object.

3. The computer-implemented method of claim 2, further comprising assigning the operating system object to the application program based on one or more of the following: the assigned application identity, a manifest associated with the application program, and additional metadata describing the operating system object.

4. The computer-implemented method of claim 1, wherein assigning the resource identity to the resource comprises assigning the resource identity to the application program based on one or more of the following: the assigned application identity, a manifest associated with the application program, an assessment of the resource, and a hash of the resource.

5. The computer-implemented method of claim 1, further comprising determining an isolation identity for the application program, said isolation identity being associated with at least one other application program having another application identity associated therewith.

6. The computer-implemented method of claim 1, further comprising:
receiving a request to transition the application program from the assigned application identity to another application identity associated with another application program; and
responsive to the received request, assigning the other application identity to the application program.

7. The computer-implemented method of claim 1, wherein assigning the application identity to the application program comprises determining one or more of the following for the application program: an application vendor, an application name, an application version, and a checksum.

8. The computer-implemented method of claim 1, wherein assigning the resource identity to the resource comprises assigning the resource identity to the resource when the resource is created during execution of the application program.

9. The computer-implemented method of claim 1, further comprising parsing the application program to generate a signature associated with the application program, and wherein assigning the application identity to the application program comprises identifying a pre-assigned application identity for the application program based on the generated signature.

10. The computer-implemented method of claim 1, further comprising:
receiving a request from the application program for an operating system resource;
responsive to the received request, determining whether a particular version of the operating system resource exists for the application program based on the assigned application identity;
providing the application program with the particular version if the particular version exists for the application program responsive to said determining; and
otherwise generating the particular version and providing the generated, particular version to the application program responsive to said determining.

11. A computer-implemented method of enabling an operating system to protect a resource associated therewith from modification by an application program, the computer-implemented method comprising:
assigning an application identity to an application program;
receiving a request from the application program for an operating system resource;
responsive to the received request, determining whether a particular version of the operating system resource exists for the application program based on the application identity;
providing the application program with the particular version if the particular version exists for the application program responsive to said determining; and
otherwise generating the particular version and providing the generated, particular version to the application program responsive to said determining.

12. The computer-implemented method of claim 11, wherein receiving the request from the application program comprises receiving the request for one or more of the following; a file, a folder, an object, and an operating system property value.

13. The computer-implemented method of claim 1 or 11, wherein assigning the application identity to the application program comprises assigning the application identity to the application program based on one or more of the following: a manifest associated with the application program, an assessment of a plurality of files associated with the application program, a hash of the application program, and an installer identity corresponding to an installation program associated with the application program.

14. The computer-implemented method of claim 13, wherein assigning the application identity to the application program further comprises extracting metadata from one or more of the following: the manifest, the assessment, the hash, and the installer identity.

15. One or more computer-readable media having computer-executable components for performing the computer-implemented method recited in any of the preceding claims.

16. A system for performing the computer-implemented method recited in any of the preceding claims.

17. A computer-readable medium having stored thereon a data structure representing an identity context associated with a software product, said data structure comprising:
an application identity field storing a value identifying the software product; and
an isolation identity field storing a value associated with a group of software products to which the software product belongs.

18. The computer-readable medium of claim 17, wherein the software product and the group of software products share a common resource.

19. The computer-readable medium of claim 17, further comprising a resource identity field to be associated with a resource created by the software product, said resource identity field storing a value identifying the software product.

20. The computer-readable medium of claim 19, wherein the value stored in the application identity field and the value stored in the resource identity field are the same.

21. The computer-readable medium of claim 19, wherein the resource comprises one or more of the following; a process, a thread, a file, a system setting, operating system namespace, a name in the operating system namespace, and an operating system object.

22. The computer-readable medium of claim 19, wherein the resource identity field comprises a creator context and a revised context, said creator context storing the value identifying the software product which created the resource and said revised context storing another value representing an identity associated with the resource.
